# EUROPEAN PATENT APPLICATION

(11) **EP 4 598 241 A1**
(43) Date of publication of application: **06.08.2025**
(21) Application number: 23872941.2
(22) Date of filing: 21.09.2023
(51) Int. Cl.: H04W 74/00, H04W 72/04, H04W 88/02

(54) **APPARATUS AND METHOD FOR PERFORMING RANDOM ACCESS IN WIRELESS COMMUNICATION SYSTEM**

(30) Priority: 29.09.2022 US 202263411605 P; 04.11.2022 US 202263422912 P
(71) Applicant: LG Electronics Inc., Yeongdeungpo-gu Seoul 07336 (KR)
(72) Inventor: KIM, Jaehyung, Seoul 06772 (KR); LEE, Youngdae, Seoul 06772 (KR); YANG, Suckchel, Seoul 06772 (KR); AHN, Seungjin, Seoul 06772 (KR); KIM, Seonwook, Seoul 06772 (KR)
(74) Representative: Plasseraud IP
(86) International application number: PCT/KR2023/014350
(87) International publication number: WO 2024/071824

(57) **Abstract**

A method of operating a user equipment (UE) in a wireless communication system is provided. The method includes transmitting a message 1 (Msg1) to a base station (BS); receiving, from the base station, a message 2 (Msg2) related to an uplink (UL) grant; and based on a transmission bandwidth indicated in relation to a physical uplink shared channel (PUSCH) including a Msg3 in the UL grant exceeding a PUSCH transmission bandwidth of the UE which is an enhanced reduced capability (eRedCap) UE, performing a retransmission of the Msg1 instead of a transmission of the PUSCH.

## Description

### [Technical Field]

The present disclosure relates to a wireless communication system. More particularly, the present disclosure relates to a device and method for performing a random access in a wireless communication system.

### [Background Art]

Wireless communication systems are widely deployed to provide various types of communication services, such as voice and data. In general, the wireless communication system is a multiple access system capable of supporting communication with multiple users by sharing available system resources (bandwidth, transmission power, etc.). Examples of the multiple access system include a Code Division Multiple Access (CDMA) system, a Frequency Division Multiple Access (FDMA) system, a Time Division Multiple Access (TDMA) system, an Orthogonal Frequency Division Multiple Access (OFDMA) system, and a Single Carrier Frequency Division Multiple Access (SC-FDMA) system.

### [Disclosure]

### [Technical Problem]

In order to solve the above-described and other problems, the present disclosure provides a device and method for performing a random access in a wireless communication system.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [Technical Solution]

In order to solve the above-described and other problems, the present disclosure provides a device and method for performing a random access in a wireless communication system.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [Advantageous Effects]

In order to solve the above-described and other problems, the present disclosure can provide a device and method for performing a random access in a wireless communication system.

### [Description of Drawings]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.
FIG. 1 illustrates physical channels used in a system applicable to the present disclosure and an example of a general signal transmission method using the physical channels.
FIG. 2 illustrates an example of a synchronization signal block (SSB) in a system applicable to the present disclosure.
FIG. 3 illustrates an example of transmission of a synchronization signal block (SSB) in a system applicable to the present disclosure.
FIG. 4 illustrates an example of a random access procedure in a system applicable to the present disclosure.
FIG. 5 illustrates an example of a random access procedure in a system applicable to the present disclosure.
FIG. 6 illustrates an example of a 2-step contention based random access (CBRA) procedure in a system applicable to the present disclosure.
FIG. 7 illustrates an example of a 2-step contention-free random access (CFRA) procedure in a system applicable to the present disclosure.
FIG. 8 illustrates an example of an operation process of a UE in a system applicable to the present disclosure.
FIG. 9 illustrates an example of an operation process of a base station in a system applicable to the present disclosure.
FIG. 10 illustrates an example of a structure of a first device and a second device in a system applicable to the present disclosure.

### [Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

### General Signal Transmission Method in 3GPP

### Physical Channels and General Signal Transmission

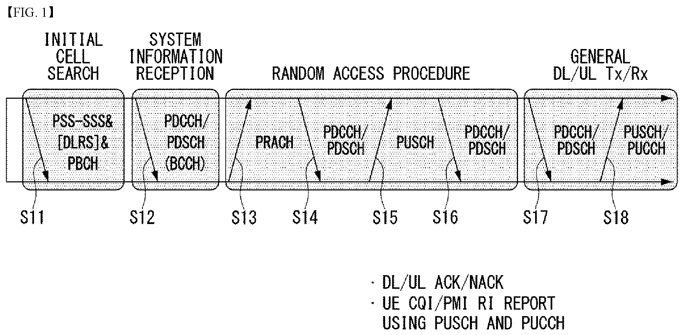

FIG. 1 illustrates physical channels used in a system applicable to the present disclosure and an example of a general signal transmission method using the physical channels. More specifically, FIG. 1 illustrates physical channels and general signal transmission used in the 3GPP system.

FIG. 1 illustrates physical channels and general signal transmission used in the 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

A UE that is powered on again while being powered off or enters a new cell performs an initial cell search operation such as synchronizing with a base station (BS) in S11. To this end, the UE receives a primary synchronization channel (PSCH) and a secondary synchronization channel (SSCH) from the base station to synchronize with the base station and acquires information such as a cell identity (ID), etc. Further, the UE may receive a physical broadcast channel (PBCH) from the base station and acquire in-cell broadcast information. The UE may receive a downlink reference signal (DL RS) in an initial cell search step to check a downlink channel state.

The UE that completes the initial cell search may receive a physical downlink control channel (PDCCH) and a physical downlink shared channel (PDSCH) corresponding to the PDCCH to acquire more detailed system information, in S12.

Next, the UE may perform a random access procedure in order to complete an access to the base station, in S13 to S16. Specifically, the UE may transmit a preamble on a physical random access channel (PRACH) in S13, and receive a random access response (RAR) for the preamble on the PDCCH and the PDSCH corresponding to the PDCCH in S14. Thereafter, the UE may transmit a physical uplink shared channel (PUSCH) using scheduling information within the RAR in S15, and perform a contention resolution procedure such as the PDCCH and the PDSCH corresponding to the PDCCH in S16.

Next, the UE that performs the above-described procedure may perform PDCCH/PDSCH reception S17 and PUSCH/physical uplink control channel (PUCCH) transmission S18, as a general uplink/downlink signal transmission procedure. Control information that the UE transmits to the base station is referred to as uplink control information (UCI). The UCI includes hybrid automatic repeat and request (HARQ) acknowledgement/negative ACK (ACK/NACK), scheduling request (SR), channel state information (CSI), etc. The CSI includes a channel quality indication (CQI), a precoding matrix indicator (PMI), a rank indicator (RI), etc. The UCI is generally transmitted on the PUCCH, but if control information and data need to be transmitted at the same time, the UCI may be transmitted on the PUSCH. The UE may aperiodically transmit the UCI on the PUSCH based on a request/indication of the network.

### Initial Access (IA) and Random Access (RA) Procedure

### Synchronization Signal Block (SSB) transmission and related operation

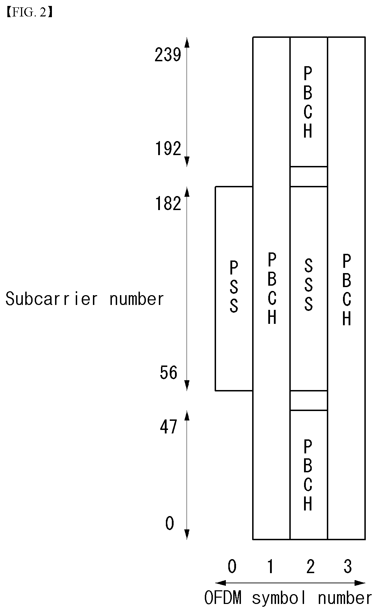

FIG. 2 illustrates an example of a synchronization signal block (SSB) in a system applicable to the present disclosure.

The UE may perform cell search, system information acquisition, beam alignment for initial access, DL measurement, and the like based on an SSB. The SSB is interchangeably used with a synchronization signal/physical broadcast channel (SS/PBCH) block.

Referring to FIG. 2, the SSB includes a PSS, an SSS and a PBCH. The SSB consists of four consecutive OFDM symbols, and the PSS, the PBCH, the SSS/PBCH or the PBCH is transmitted per OFDM symbol. Each of the PSS and the SSS consists of one OFDM symbol and 127 subcarriers, and the PBCH consists of 3 OFDM symbols and 576 subcarriers. The PBCH is encoded/decoded based on a polar code and is modulated/demodulated according to quadrature phase shift keying (QPSK). The PBCH in the OFDM symbol includes data resource elements (REs), to which a complex modulation value of the PBCH is mapped, and DMRS REs, to which a demodulation reference signal (DMRS) for the PBCH is mapped. There are three DMRS REs per resource block of the OFDM symbol, and there are three data REs between the DMRS REs.

### Cell Search

The cell search refers to a procedure in which a UE acquires time/frequency synchronization of a cell and detects a cell identifier (ID) (e.g., physical layer cell ID (PCI)) of the cell. The PSS is used to detect a cell ID from a cell ID group, and the SSS is used to detect a cell ID group. The PBCH is used to detect an SSB (time) index and a half-frame.

The cell search procedure of the UE may be summarized as shown in Table 1 below.

**[Table 1]**

| | Type of Signals | Operations |
|---|---|---|
| 1st step | PSS | * SS/PBCH block (SSB) symbol timing acquisition |
| | | * Cell ID detection within a cell ID group (3 hypothesis) |
| 2nd Step | SSS | * Cell ID group detection (336 hypothesis) |
| 3rd Step | PBCH DMRS | * SSB index and Half frame (HF) index (Slot and frame boundary detection) |
| 4th Step | PBCH | * Time information (80 ms, System Frame Number (SFN), SSB index, HF) |
| | | * Remaining Minimum System Information (RMSI) Control resource set (CORESET)/Search space configuration |
| 5th Step | PDCCH and PDSCH | * Cell access information |
| | | * RACH configuration |

There are 336 cell ID groups, and there are 3 cell IDs per cell ID group. A total of 1008 cell IDs are present. Information on a cell ID group to which a cell ID of a cell belongs is provided/acquired via the SSS of the cell, and information on the cell ID among 336 cells in the cell ID is provided/acquired via the PSS.

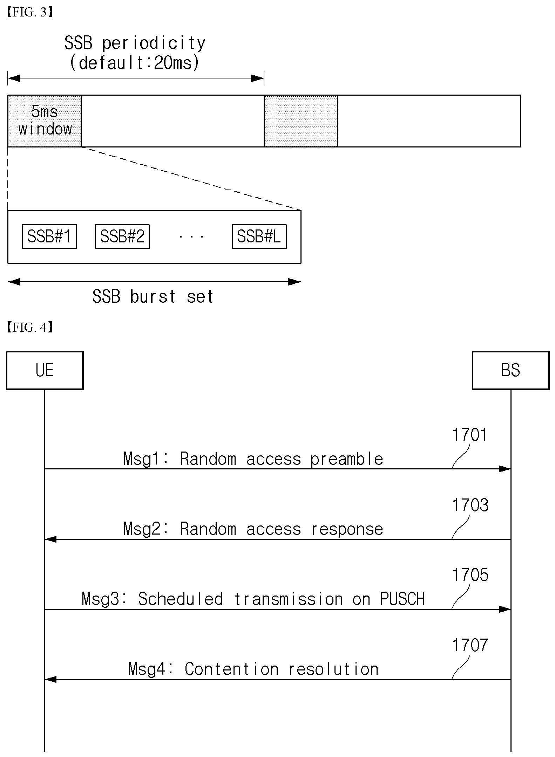

FIG. 3 illustrates an example of transmission of a synchronization signal block (SSB) in a system applicable to the present disclosure.

The SSB is periodically transmitted in accordance with SSB periodicity. A default SSB periodicity assumed by a UE during initial cell search is defined as 20 ms. After cell access, the SSB periodicity may be set to one of {5 ms, 10 ms, 20 ms, 40 ms, 80 ms, 160 ms} by a network (e.g., a BS). An SSB burst set is configured at a beginning part of the SSB periodicity. The SSB burst set includes a 5 ms time window (i.e., half-frame), and the SSB may be transmitted up to N times within the SS burst set. The maximum transmission number L of the SSB may be given as follows according to a frequency band of a carrier. One slot includes up to two SSBs.
- For frequency range up to 3 GHz, L = 4
- For frequency range from 3GHz to 6 GHz, L = 8
- For frequency range from 6 GHz to 52.6 GHz, L = 64

A time position of an SSB candidate in the SS burst set may be defined based on a subscriber spacing. The time position of the SSB candidate is indexed from 0 to L-1 (SSB index) in time order within the SSB burst set (i.e., half-frame).

A plurality of SSBs may be transmitted within a frequency span of a carrier. Physical layer cell identifiers of these SSBs need not be unique, and other SSBs may have other physical layer cell identifiers.

The UE may acquire DL synchronization by detecting the SSB. The UE can identify a structure of the SSB burst set based on the detected SSB (time) index, and thus can detect a symbol/slot/half-frame boundary. The number of the frame/half-frame to which the detected SSB belongs may be identified using system frame number (SFN) information and half-frame indication information.

Specifically, the UE may acquire a 10-bit SFN for a frame to which PBCH belongs from the PBCH. Next, the UE may acquire 1-bit half-frame indication information. For example, if the UE detects a PBCH with a half-frame indication bit set to 0, the UE may determine that the SSB, to which the PBCH belongs, belongs to a first half-frame in the frame, and if the UE detects a PBCH with a half-frame indication bit set to 1, the UE may determine that the SSB, to which the PBCH belongs, belongs to a second half-frame in the frame. Finally, the UE may acquire an SSB index of the SSB, to which the PBCH belongs, based on a DMRS sequence and a PBCH payload carried by the PBCH.

### System Information Acquisition

System information (SI) is divided into a master information block (MIB) and a plurality of system information blocks (SIB). The SI other than the MIB may be referred to as remaining minimum system information (RMSI). The following may be referred to for details.
- The MIB includes information/parameters for monitoring PDCCH scheduling PDSCH carrying system information block 1 (SIB1) and is transmitted by a BS via PBCH of SSB. For example, a UE may check whether a control resource set (CORESET) for a Type0-PDCCH common search space exists based on the MIB. The Type0-PDCCH common search space is a kind of PDCCH search space and is used to transmit a PDCCH for scheduling an SI message. If there is a Type0-PDCCH common search space, the UE may determine, based on information (e.g., pdcch-ConfigSIB1)) within the MIB, (i) a plurality of contiguous resource blocks and one or more consecutive symbols constituting the CORESET, and (ii) a PDCCH occasion (e.g., time domain location for PDCCH reception). If there is no Type0-PDCCH common search space, pdcch-ConfigSIB1 provides information for a frequency location where SSB/SIB1 exists and a frequency range where the SSB/SIB1 does not exist.
- The SIB1 contains information related to availability and scheduling (e.g., transmission periodicity, SI-window size) of the remaining SIBs (hereinafter, referred to as SIBx, where x is an integer of 2 or more). For example, the SIB1 may inform whether the SIBx is periodically broadcasted or whether the SIBx is provided by a request of the UE according to an on-demand scheme. If the SIBx is provided by the on-demand scheme, the SIB1 may include information which the UE requires to perform an SI request. The SIB1 is transmitted via the PDSCH, the PDCCH for scheduling the SIB1 is transmitted through the Type0-PDCCH common search space, and the SIB1 is transmitted via the PDSCH indicated by the PDCCH.
- The SIBx is included in the SI message and is transmitted via the PDSCH. Each SI message is sent within a time window (i.e., SI-window) which periodically occurs.

### Channel Measurement and Rate-matching

Up to L SSBs may be transmitted within an SSB burst set, and the number/location of SSBs which are actually transmitted may vary per BS/cell. The number/location of SSBs which are actually transmitted is used for rate-matching and measurement, and information on the actually transmitted SSBs is provided to a UE.

### Random Access Procedure

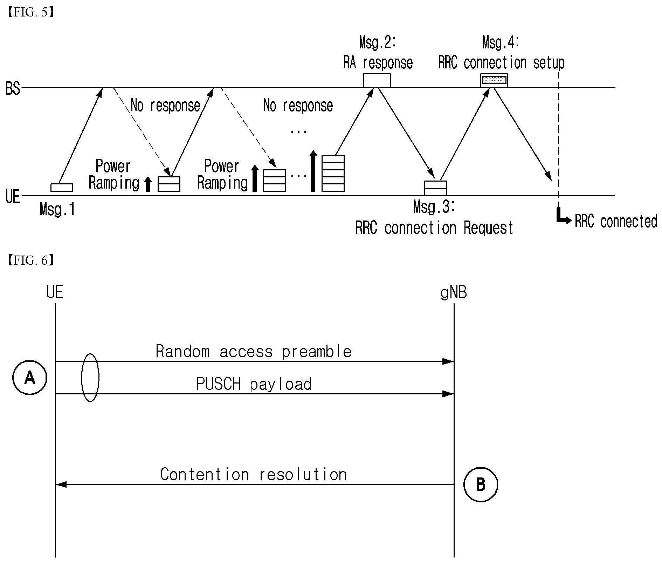

A random access procedure of a UE may be summarized as shown in Table 2 and FIGS. 4 and 5.

**[Table 2]**

| | Type of Signals | Operations/Information obtained |
|---|---|---|
| 1^{st} step | PRACH preamble in UL | * Initial beam obtainment |
| | | * Random selection of RA-preamble ID |
| 2^{nd} step | Random Access Response on DL-SCH | * Timing Advanced information |
| | | * RA-preamble ID |
| | | * Initial UL grant, Temporary C-RNTI |
| 3^{rd} step | UL transmission on UL-SCH | * RRC connection request |
| | | * UE identifier |
| 4^{th} step | Contention Resolution on DL | * Temporary C-RNTI on PDCCH for initial access |
| | | * C-RNTI on PDCCH for UE in RRC_CONNECTED |

The random access procedure is used for various purposes. For example, the random access procedure may be used for network initial access, handover, and UE-triggered UL data transmission. The UE may acquire UL synchronization and UL transmission resources through the random access procedure. The random access procedure is classified into a contention-based random access procedure and a contention-free random access procedure.

FIG. 4 illustrates an example of a random access procedure in a system applicable to the present disclosure.

FIG. 5 illustrates an example of a random access procedure in a system applicable to the present disclosure.

First, a UE may transmit a random access preamble on a PRACH as Msg1 of a random access procedure in UL (e.g., see 1701 of FIG. 4).

Random access preamble sequences having different two lengths are supported. Long sequence length 839 is applied to subcarrier spacings of 1.25 kHz and 5 kHz, and short sequence length 139 is applied to subcarrier spacings of 15 kHz, 30 kHz, 60 kHz and 120 kHz.

Multiple preamble formats are defined by one or more RACH OFDM symbols and different cyclic prefixes (and/or guard time). RACH configuration for a cell is included in system information of the cell and is provided to the UE. The RACH configuration includes information on a subcarrier spacing of PRACH, available preambles, preamble format, and the like. The RACH configuration includes association information between SSBs and RACH (time-frequency) resources. The UE transmits a random access preamble in the RACH time-frequency resource associated with the detected or selected SSB.

A threshold of the SSB for the RACH resource association may be set by the network, and an RACH preamble is transmitted or retransmitted based on the SSB in which reference signal received power (RSRP) measured based on the SSB satisfies the threshold. For example, the UE may select one of the SSB(s) satisfying the threshold and may transmit or retransmit the RACH preamble based on the RACH resource associated with the selected SSB.

When a BS receives the random access preamble from the UE, the BS transmits a random access response (RAR) message (Msg2) to the UE (e.g., see 1703 of FIG. 4). A PDCCH that schedules a PDSCH carrying a RAR is CRC masked with a random access (RA) radio network temporary identifier (RNTI) (RA-RNTI) and is transmitted. The UE that detects the PDCCH masked with the RA-RNTI may receive a RAR from the PDSCH scheduled by DCI carried by the PDCCH. The UE checks whether the RAR includes random access response information for the preamble transmitted by the UE, i.e., Msg1. Presence or absence of random access information for the Msg1 transmitted by the UE may be determined based on presence or absence of a random access preamble ID for the preamble transmitted by the UE. If there is no response to the Msg1, the UE may retransmit the RACH preamble less than a predetermined number of times while performing power ramping. The UE calculates PRACH transmission power for preamble retransmission based on most recent pathloss and a power ramping counter.

The random access response information includes timing advance information, an UL grant, and UE temporary cell RNTI for UL synchronization. If a temporary UE receives random access response information for the UE itself on the PDSCH, the UE can know timing advance information for UL synchronization, an initial UL grant, and UE temporary cell RNTI (C-RNTI). The timing advance information is used to control uplink signal transmission timing. In order to ensure that the PUSCH/PUCCH transmission by the UE is better aligned with subframe timing at a network end, the network (e.g. BS) may measure a time difference between the PUSCH/PUCCH/SRS reception and subframes and send timing advance information based on the time difference. The UE may perform UL transmission as Msg3 of the random access procedure on a physical uplink shared channel based on the random access response information (e.g., see 1705 of FIG. 4). The Msg3 may include an RRC connection request and a UE identifier. The network may transmit Msg4 as a response to the Msg3, and the Msg4 may be handled as a contention resolution message on DL (e.g., see 1707 of FIG. 4). The UE may enter an RRC connected state by receiving the Msg4.

The contention-free random access procedure may be used or performed when the UE handovers to another cell or the BS or when the contention-free random access procedure is requested by a command of the BS. A basic process of the contention-free random access procedure is similar to the contention-based random access procedure. However, unlike the contention-based random access procedure in which the UE randomly selects a preamble to be used among a plurality of random access preambles, in the contention-free random access procedure, a preamble (hereinafter, referred to as a dedicated random access preamble) to be used by the UE is allocated by the BS to the UE. Information on the dedicated random access preamble may be included in an RRC message (e.g., a handover command) or may be provided to the UE via a PDCCH order. When the random access procedure is initiated, the UE transmits the dedicated random access preamble to the BS. When the UE receives the random access procedure from the BS, the random access procedure is completed.

As mentioned above, the UL grant in the RAR schedules PUSCH transmission to the UE. The PUSCH carrying initial UL transmission based on the UL grant in the RAR is also referred to as Msg3 PUSCH. The content of the RAR UL grant starts at an MSB and ends at a LSB, and is given in Table 3.

**[Table 3]**

| **RAR UL grant field** | **Number of bits** |
|---|---|
| Frequency hopping flag | 1 |
| Msg3 PUSCH frequency resource allocation | 12 |
| Msg3 PUSCH time resource allocation | 4 |
| Modulation and coding scheme (MCS) | 4 |
| Transmit power control (TPC) for Msg3 PUSCH | 3 |
| CSI request | 1 |

A TPC command is used to determine transmission power of the Msg3 PUSCH and is interpreted, for example, based on Table 4.

**[Table 4]**

| TPC command | value [dB] |
|---|---|
| 0 | -6 |
| 1 | -4 |
| 2 | -2 |
| 3 | 0 |
| 4 | 2 |
| 5 | 4 |
| 6 | 6 |
| 7 | 8 |

In the contention-free random access procedure, a CSI request field in the RAR UL grant indicates whether the UE includes an aperiodic CSI report in the corresponding PUSCH transmission. A subcarrier spacing for the Msg3 PUSCH transmission is provided by an RRC parameter. The UE will transmit the PRACH and Msg3 PUSCH on the same uplink carrier of the same service serving cell. A UL BWP for Msg3 PUSCH transmission is indicated by SIB1 (SystemInformationBlock1).

FIG. 6 illustrates an example of a 2-step contention based random access (CBRA) procedure in a system applicable to the present disclosure.

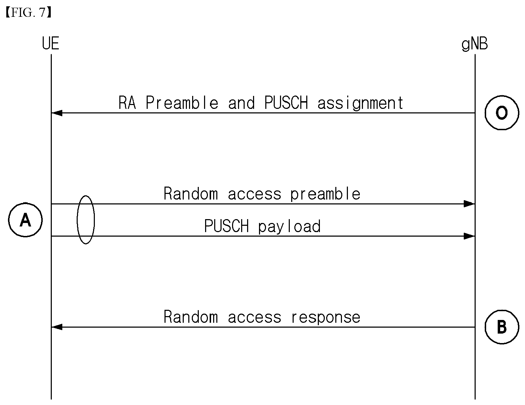

FIG. 7 illustrates an example of a 2-step contention-free random access (CFRA) procedure in a system applicable to the present disclosure.

In FIGS. 6 and 7, message A (MSGA) includes a preamble and a payload (PUSCH payload). The preamble and the payload are multiplexed in a TDM scheme. Message B (MSGB) is a response to the message A (MSGA) and may be transmitted for contention resolution, fallback indication(s) and/or backoff indication.

### Technical terms used in the present disclosure

- UE: User Equipment
- SSB: Synchronization Signal Block
- MIB: Master Information Block
- RMSI: Remaining Minimum System Information
- FR1: Frequency Range 1. It refers to a frequency domain less than or equal to 6 GHz (e.g., 450 MHz to 6,000 MHz).
- FR2: Frequency Range 2. It refers to a millimeter wave (mmWave) domain greater than or equal to 24 GHz (e.g., 24,250 MHz to 52,600 MHz).
- BW: Bandwidth
- BWP: Bandwidth Part
- RNTI: Radio Network Temporary Identifier
- CRC: Cyclic Redundancy Check
- SIB: System Information Block
- SIB1: SIB1 for NR devices = RMSI (Remaining Minimum System Information). It broadcasts information, etc. necessary for cell access of an NR UE.
- CORESET (COntrol REsource SET): Time/frequency resource in which an NR UE attempts candidate PDCCH decoding
- CORESET#0: CORESET for Type0-PDCCH CSS set for NR devices (configured in MIB)
- Type0-PDCCH CSS set: a search space set in which an NR UE monitors a set of PDCCH candidates for a DCI format with CRC scrambled by a SI-RNTI
- MO: PDCCH Monitoring Occasion for Type0-PDCCH CSS set
- SIB1-R: (additional) SIB1 for reduced capability NR devices. It may be limited when it is generated in a separate TB from SIB1 and is transmitted on a separate PDSCH.
- CORESET#0-R: CORESET#0 for reduced capability NR devices
- Type0-PDCCH-R CSS set: a search space set in which a redcap UE monitors a set of PDCCH candidates for a DCI format with CRC scrambled by a SI-RNTI
- MO-R: PDCCH Monitoring Occasion for Type0-PDCCH CSS set
- Cell defining SSB (CD-SSB): SSB including RMSI scheduling information among NR SSBs
- Non-cell defining SSB (non-CD-SSB): It refers to SSB that has been deployed on NR sync raster but does not include RMSI scheduling information of a corresponding cell for measurement. But, the SSB can include information informing a location of cell defining SSB.
- SCS: Subcarrier Spacing
- SI-RNTI: System Information Radio-Network Temporary Identifier
- Camp on: "Camp on" is the UE state in which the UE stays on a cell and is ready to initiate a potential dedicated service or to receive an ongoing broadcast service.
- TB: Transport Block
- RSA (Redcap standalone): Redcap device or cell supporting only service.
- SIB1(-R)-PDSCH: PDSCH transmitting SIB1(-R)
- SIB1(-R)-DCI: DCI scheduling SIB1(-R)-PDSCH. DCI format 1_0 with CRC scrambled by SI-RNTI.
- SIB1(-R)-PDCCH: PDCCH transmitting SIB1(-R)-DCI
- FDRA: Frequency Domain Resource Allocation
- TDRA: Time Domain Resource Allocation
- RA: Random Access
- MSGA: preamble and payload transmissions of the random access procedure for 2-step RA type.
- MSGB: response to MSGA in the 2-step random access procedure. MSGB may consist of response(s) for contention resolution, fallback indication(s), and backoff indication.
- RO-N: RACH Occasion (RO) for normal UE 4-step RACH and 2-step RACH (if configured)
- RO-N1, RO-N2: If a separate RO for normal UE 2-step RACH is configured, it is distinguished into RO-N1(4-step) and RO-N2(2-step).
- RO-R: RACH Occasion (RO) configured for redcap UE 4-step RACH and 2-step RACH (if configured) separately from RO-N
- RO-R1, RO-R2: If a separate RO for redcap UE 2-step RACH is configured, it is distinguished into RO-R1(4-step) and RO-R2(2-step).
- PG-R: MsgA-Preambles Group for redcap UEs
- RAR: Random Access Response
- RAR window: the time window to monitor RA response(s)
- FH: Frequency Hopping
- iBWP: initial BWP
- iBWP-DL(-UL): initial DL(UL) BWP
- iBWP-DL(-UL)-R: (separate) initial DL(UL) BWP for RedCap
- CS: Cyclic shift
- NB: Narrowband
- TO: Traffic Offloading
- mMTC; massive Machine Type Communications
- eMBB: enhanced Mobile Broadband Communication
- URLLC: Ultra-Reliable and Low Latency Communication
- RedCap: Reduced Capability
- eRedCap: enhanced RedCap
- FDD: Frequency Division Duplex
- HD-FDD: Half-Duplex-FDD
- DRX: Discontinuous Reception
- RRC: Radio Resource Control
- RRM: Radio Resource Management
- IWSN: Industrial Wireless Sensor Network
- LPWA: Low Power Wide Area
- RB: Resource Block
- CCE: Control Channel Element
- AL: Aggregation Level
- PRG: Physical Resource-block Group
- DFT-s-OFDM: DFT-spread OFDM
- PBCH: Physical Broadcast Channel
- A-PBCH: Additional PBCH
- BD: blind detection
- EPRE: Energy Per RE
- SNR: Signal-to-Noise Ratio
- TDM: Time Division Multiplexing
- DMRS: DeModulation Reference Signal
- TDD: Time Division Duplex
- SS: Synchronization Signal
- RS: Reference Signal
- SIB 1-eR: dedicated SIB1 for eRedCap devices. It can be generated and transmitted in the same TB as SIB1 for a non-eRedCap UE or a separate TB, and can be transmitted on a separate PDSCH if it is generated in the separate TB.
- RF: Radio Frequency
- BB: BaseBand
- OSI: Other System Information

### Proposed method of the present disclosure

In the present disclosure, '()' can be interpreted as both when excluding content in parentheses and when including content in parentheses.

In the present disclosure, '/' can be interpreted as when including all the contents separated by '/' (and), or when including only a part of the separated contents (or).

In addition to 5G main use cases (mMTC, eMBB and URLLC), importance/interest in use case areas across mMTC and eMBB, or mMTC and URLLC has been increasing recently. In order to more efficiently support these use cases including connected industries, smart city, wearables, etc. in terms of UE cost/complexity, power consumption, or the like in a wireless communication system, a new type of UE which is distinguished from an existing NR UE has been introduced. The new type of UE is referred to as a Reduced Capability NR UE/terminal or simply a RedCap UE/terminal or RedCap, and the existing NR UE is referred to as a non-RedCap UE/terminal or non-RedCap or general/existing NR UE/terminal, etc. in order to distinguish from the RedCap UE.

The RedCap UE has features that are inexpensive compared to the non-RedCap UE and have low power consumption, and in particular, may have all or some of the following features.

### [RedCap UE features]

(1) Complexity reduction features
(1-1) Reduced maximum UE Bandwidth
(1-2) Reduced number of UE RX/TX branches/antennas
(1-3) Half-Duplex-FDD
(1-4) Relaxed UE processing time
(1-5) Relaxed UE processing capability
(2) Power saving
(2-1) Extended DRX for RRC Inactive and/or Idle
(2-2) RRM relaxation for stationary devices

Target use cases of the RedCap UE with the above features, or simply RedCap use cases may be as follows.

### [Redcap use cases]

(1) Connected industries
(1-1) Sensors and actuators are connected to 5G networks and core
(1-2) Include massive IWSN (Industrial Wireless Sensor Network) use cases and requirements
(1-3) Not only URLLC services with very high requirements, but also relatively low-end services with the requirement of small device form factors with a battery life of several years
(1-4) Requirements for these services are higher than LPWA (Low Power Wide Area, i.e. LTE-M/NB-IOT) but lower than URLCC and eMBB
(1-5) Devices in such environment include e.g. pressure sensors, humidity sensors, thermometers, motion sensors, accelerometers, actuators, etc.
(2) Smart city
(2-1) The smart city vertical covers data collection and processing to more efficiently monitor and control city resources, and to provide services to city residents
(2-2) Especially, the deployment of surveillance cameras is an essential part of the smart city but also of factories and industries
(3) Wearables
(3-1) Wearables use case includes smart watches, rings, eHealth related devices, and medical monitoring devices etc.
(3-2) One characteristic for the use case is that the device is small in size

### [Background of the invention] Introduction of eRedCap UE type for further UE complexity reduction

As mentioned above, a method of reducing a UE reception bandwidth as much as possible may be considered for the purpose of reducing the complexity/power consumption of the RedCap UE. However, if the UE reception bandwidth is reduced beyond a specific value, common channel reception of SIB1, OSI, Msg2 (RAR), Msg4, etc. becomes impossible, which may adversely affect existing network configuration or coexistence of the RedCap UE and a non-RedCap UE. Considering this drawback, an alternative is considered in which a bandwidth supported by the UE for data transmission and reception, i.e., a UE PDSCH/PUSCH (transmission/receiption) bandwidth, is separated from a UE bandwidth for transmitting and receiving control channels or other signals, and only the UE PDSCH/PUSCH bandwidth is reduced. In this instance, the PDSCH includes a PDSCH for broadcast and a PDSCH for unicast.

In the same manner as above, a UE (type) with additionally reduced UE complexity/power consumption compared to the RedCap UE is referred to as an enhanced RedCap UE, abbreviated as an eRedCap UE/terminal, or simply an eRedCap. On the contrary, a UE that is not the eRedCap UE (including the RedCap UE and a non-RedCap UE) is referred to as a non-eRedCap UE/terminal, or simply a non-eRedCap.

The present disclosure proposes a random access support method for an eRedCap UE, more specifically, a UE in which only a UE PDSCH/PUSCH bandwidth is reduced, and a base station/UE operation for supporting the same.

In the present disclosure, a frequency band may include a meaning of a location/size of the frequency band.

In the present disclosure, post fast Fourier transform (FFT) resource element (RE) buffering refers to an operation stored in units of RE for a post-processing operation, such as channel estimation/compensation and LDCP decoding, at an FFT output end of a receiver in a process for an NR UE to receive an OFDM signal. Reducing a buffer size required for the operation is effective in reducing UE complexity/cost.

In the present disclosure, Msg2 and RAR can be interpreted/applied interchangeably.

In the present disclosure, broadcast signaling includes system information including SIB1, MIB, a PBCH payload generated in a PHY layer in addition to MIB, and a signaling method using a PBCH scrambling sequence and PBCH DMRS sequence initialization information, or the like.

### Method of determining UE Msg2 PDSCH reception band in random access procedure

An eRedCap UE may transmit a Msg1 preamble through an eRedCap specific PRACH resource or a PRACH resource shared with a non-eRedCap UE. Since the eRedCap UE may not have any restrictions on PRACH transmission in terms of UE bandwidth, the eRedCap UE may transmit the Msg1 preamble in the same manner as the non-eRedCap UE.

After the eRedCap UE transmits the Msg1 preamble, the eRedCap UE may receive a Msg2 PDCCH through an initial DL BWP (specific to the eRedCap or shared with the RedCap/non-RedCap) configured for the eRedCap UE via SIB1 or MIB.

After the eRedCap UE receives the Msg2 PDCCH, the eRedCap UE may determine a Msg2 PDSCH reception frequency band for Msg2 PDSCH reception in the following method.

### [Method #1-1] Indication/determination via RAR DCI

The eRedCap UE may indicate/determine a reception frequency band of a Msg2 PDSCH within an initial DL BWP (specific to the eRedCap or shared with the RedCap/non-RedCap) configured for the eRedCap UE via SIB1 or MIB via DCI received using RA-RNTI via the Msg2 PDCCH.

In the Method #1-1, since the UE can grasp scheduling information of the Msg2 PDSCH (more specifically, Msg2 PDSCH transmission frequency band information) at time at which the UE successfully decodes DCI for scheduling the Msg2 PDSCH, the eRedCap UE in which only a UE PDSCH/PUSCH bandwidth is reduced may be requested to perform post-FFT RE buffering for all REs within an initial DL BWP frequency band that exceeds the UE PDSCH/PUSCH bandwidth for a 'specific time'. In this case, the specific time may mean, for example, a time duration including time required for minimum DCI decoding.

As above, when the UE is required to perform the post-FFT RE buffering on the REs exceeding the UE PDSCH/PUSCH bandwidth for the specific time, the buffer size reduction effect due to a reduction in the UE PDSCH/PUSCH bandwidth may be significantly reduced.

### [Method #1-2] Determination by SIB1 PDSCH reception band

The eRedCap UE may determine a frequency band determined for SIB1 PDSCH reception as a UE Msg2 PDSCH reception band. This method may be applied only when an initial DL BWP (which has received or is configured to receive Msg2 PDCCH) includes an SIB1 PDSCH reception band, or only when the initial DL BWP is a CORESET#0 band or includes CORESET#0.

A frequency location of a SIB1 PDSCH reception band may be determined by a specific frequency offset value based on a frequency location of CORESET#0/SSB/PSS/SSS, and the specific frequency offset value may be predefined in the NR standard or broadcast signaled.

In the Method #1-2, since a Msg2 PDSCH will be received in the SIB1 PDSCH reception band, in this case, the UE may expect to receive the Msg2 PDCCH through CORESET#0 in the same manner as the SIB1 PDSCH reception process. The base station/UE operations of the Method #1-2 can be equally applied even if a separate initial DL BWP for eRedCap is configured in SIB1. That is, in this case, DL reception for the separate initial DL BWP for eRedCap may be applied from a Msg4 stage or applied in a connected mode.

In the Method #1-2, since a frequency band determined in an SIB1 PDSCH reception step is used as a Msg2 PDSCH reception frequency band, the UE may determine the Msg2 PDSCH reception frequency band before a Msg2 PDSCH reception time. Therefore, there is an advantage in that post-FFT RE buffering is required only for the reduced PDSCH/PUSCH bandwidth.

### [Method #1-3] Indication/determination predefined in NR standard or via broadcast signaling

The eRedCap UE may determine, as the reception frequency band of the Msg2 PDSCH, a specific frequency band within an initial DL BWP (specific to the eRedCap or shared with the RedCap/non-RedCap) configured for the eRedCap UE by pre-definition/pre-agreement or through configuration via broadcast signaling including SIB1.

A location of the Msg2 PDSCH reception frequency band may be determined by a specific frequency offset value based on a frequency location of CORESET#0/SSB/PSS/SSS, and the specific frequency offset value may be predefined in the NR standard or broadcast-signaled.

Since this method can determine the Msg2 PDSCH reception frequency band before a Msg2 PDSCH reception time in the same manner as the Method #1-2, there is an advantage of requiring post-FFT RE buffering for a reduced PDSCH/PUSCH bandwidth from a UE perspective.

### [Method #1-4] Determining Msg2 PDSCH reception frequency based on whether there is a Msg1 eRedCap early identification

Based on whether there is an eRedCap UE early identification in the Msg1 stage, the Msg2 PDSCH reception frequency band may be determined in one of the above methods. For example, if the UE indicates to a base station that it is an eRedCap UE in the Msg1 stage, the Method #1-2 (or the Method #1-3) in which the post-FFT RE buffering is required for the reduced PDSCH/PUSCH bandwidth may be assumed, otherwise, the Method #1-1 may be assumed.

Alternatively, if a separate eRedCap early identification is not supported in the Msg1 stage and a RedCap including an eRedCap and a non-RedCap can be distinguished, the Msg2 PDSCH reception frequency band can be determined by one of the above methods depending on whether it is a RedCap including an eRedCap or a non-RedCap. For example, if it is the RedCap including the eRedCap, i.e., if the Msg2 PDSCH is expected to include only MAC RAR(s) for the RedCap or the eRedCap, the Method #1-2 (or the Method #1-3) requiring the post-FFT RE buffering may be assumed, otherwise, i.e., if it is the non-RedCap, the Method #1-1 may be assumed. This may be to apply a method in which the post-FFT RE buffering is required for the reduced PDSCH/PUSCH bandwidth only for the RedCap including the eRedCap in order to minimize an impact on the non-RedCap.

### Method of determining UE Msg3 PUSCH transmission band in random access procedure

After an eRedCap UE receives a Msg2 PDSCH, the eRedCap UE may transmit a Msg3 PUSCH through an initial UL BWP (specific to the eRedCap or shared with RedCap/non-RedCap) configured for the eRedCap UE. In this instance, the eRedCap UE may determine a transmission frequency band of the Msg3 PUSCH in the following method.

### [Method #2-1] Indication in MAC RAR UL grant

The eRedCap UE may determine a Msg3 PUSCH transmission band with reference to UL grant information of MAC RAR received through the Msg2 PDSCH. The UL grant information for eRedCap may be:
- eRedCap-specific scheduling information, or
- UL grant information shared with the RedCap/non-RedCap UE.

### [Method #2-1a] eRedCap-specific UL grant

If it is the eRedCap-specific scheduling information, the eRedCap UE may receive eRedCap-specific UL grant information from a separate UL grant field within the MAC RAR shared with the non-eRedCap, or receive it through an UL grant field of a separate (eRedCap-specific) MAC RAR/Msg2 PDSCH.

The eRedCap UE may expect the eRedCap-specific UL grant information only if the eRedCap UE indicates to a base station that it is an eRedCap UE in the Msg1 stage.

If the eRedCap UE receives Msg3 PUSCH scheduling information through the eRedCap-specific UL grant information, the eRedCap UE may not expect a UL grant exceeding a UE PUSCH transmission bandwidth, or if this situation occurs, the eRedCap UE may stop the Msg3 PUSCH transmission and fallback to a Msg1 preamble transmission step. That is, it may be that the operation is performed in the case of contention resolution not successful or failure as stipulated in TS 38.321 spec, as it is considered that contention resolution has failed (see TS 38.321 in Table 5 below). Whether the latter operation is supported and parameters required to support the operation may be pre-defined in the spec, or may be configured by the base station via broadcast signaling including SIB1.

**[Table 5]**

| | | | | | |
|---|---|---|---|---|---|
| [TS 38.321] | | | | | |
| 5.1.5 Contention Resolution | | | | | |
| Once Msg3 is transmitted the MAC entity shall: | | | | | |
| ... | | | | | |
| | 1> if the Contention Resolution is considered not successful: | | | | |
| | | 2> flush the HARQ buffer used for transmission of the MAC PDU in the Msg3 buffer; | | | |
| | | *2>* increment *PREAMBLE_TRANSMISSION_COUNTER* by 1; | | | |
| | | 2> if *PREAMBLE_TRANSMISSION_COUNTER = preambleTransMax +* 1: | | | |
| | | | 3> indicate a Random Access problem to upper layers. | | |
| | | | 3> if this Random Access procedure was triggered for SI request: | | |
| | | | | 4> consider the Random Access procedure unsuccessfully completed. | |
| | | 2> if the Random Access procedure is not completed: | | | |
| | | | 3> if the *RA_TYPE* is set to *4-stepRA:* | | |
| | | | | 4> select a random backoff time according to a uniform distribution between 0 and the *PREAMBLE_BACKOFF;* | |
| | | | | 4> if the criteria (as defined in clause 5.1.2) to select contention-free Random Access Resources is met during the backoff time: | |
| | | | | | 5> perform the Random Access Resource selection procedure (see clause 5.1.2); |
| | | | | 4> else: | |
| | | | | | 5> perform the Random Access Resource selection procedure (see clause 5.1.2) after the backoff time. |
| | | | 3> else (i.e. the *RA_TYPE* is set to *2-stepRA*): | | |
| | | | | 4> if *msgA-TransMax* is applied (see clause 5.1.1a) and *PREAMBLE_TRANSMISSION_COUNTER = msgA-TransMax +* 1: | |
| | | | | | 5> set the *RA_TYPE* to *4-stepRA*; |
| | | | | | 5> perform initialization of variables specific to Random Access type as specified in clause 5.1. 1a; |
| | | | | | 5> flush HARQ buffer used for the transmission of MAC PDU in the MSGA buffer; |
| | | | | | 5> discard explicitly signalled contention-free 2-step RA type Random Access Resources, if any; |
| | | | | | 5> perform the Random Access Resource selection as specified in clause 5.1.2. |
| | | | 4> else: | | |
| | | | | 5> select a random backoff time according to a uniform distribution between 0 and the *PREAMBLE_BACKOFF;* | |
| | | | | 5> if the criteria (as defined in clause 5.1.2a) to select contention-free Random Access Resources is met during the backoff time: | |
| | | | | | 6> perform the Random Access Resource selection procedure for 2-step RA type as specifie d in clause 5.1.2a. |
| | | | | 5> else: | |
| | | | | | 6> perform the Random Access Resource selection for 2-step RA type procedure (see clause 5.1.2a) after the backoff time. |
| ... | | | | | |

### [Method #2-1b] Shared UL grant

If the eRedCap UE receives the UL grant information shared with the RedCap UE/non-RedCap UE, the eRedCap UE may operate as follows.
- If a Msg3 PUSCH transmission bandwidth indicated in the UL grant is less than or equal to an eRedCap UE PUSCH transmission bandwidth, the eRedCap UE determines a Msg3 PUSCH frequency band based on an indication in the UL grant.
- If the Msg3 PUSCH transmission bandwidth indicated in the UL grant exceeds the eRedCap UE PUSCH transmission bandwidth, the eRedCap UE may determine, as a Msg3 PUSCH transmission frequency band, "some specific contiguous" frequency bands among Msg3 PUSCH transmission frequency bands indicated in the UL grant and transmit the Msg3 PUSCH through the determined frequency band.
- Or, when the Msg3 PUSCH transmission bandwidth indicated in the UL grant exceeds the eRedCap UE PUSCH transmission bandwidth, if an exceeding amount or ratio is less than or equal to a specific value, the eRedCap UE may transmits the Msg3 PUSCH as the "some specific contiguous" frequency bands as described above, otherwise, i.e., if the exceeding amount or ratio exceeds the specific value, the eRedCap UE may stop transmitting the Msg3 PUSCH and fallback to the Msg1 preamble transmission step. That is, it may be that the operation is performed in the case of contention resolution not successful or failure as stipulated in TS 38.321 spec, as it is considered that contention resolution has failed. (see TS 38.321 in Table 5 above)

The eRedCap UE may determine the "some specific contiguous" frequency bands for Msg3 PUSCH transmission in the following method.

The eRedCap UE determines, as the Msg3 PUSCH transmission band of the eRedCap UE, the number of contiguous RBs corresponding to the UE PUSCH transmission bandwidth in ascending (or descending) order of RB index from a lowest (or highest) RB index among Msg3 PUSCH transmission frequency bands indicated in the UL grant.

### [Msg3 PUSCH transmission method in Msg3 PUSCH transmission band]

In this case, the eRedCap UE may transmit the Msg3 PUSCH through rate-matching within the Msg3 PUSCH transmission band determined by the above method, and the base station may assume the Msg3 PUSCH transmission of the eRedCap UE and (additionally) receive it through BD. In the rate-matching method, the eRedCap UE may (re-)determine TBS based on the Msg3 PUSCH transmission band.

Alternatively, after the eRedCap UE determines the TBS based on the UL grant and generates Msg3 PUSCH transmission REs, the eRedCap UE may transmit only REs belonging to the Msg3 PUSCH transmission band determined by the above method. That is, the eRedCap UE may transmit REs outside the determined Msg3 PUSCH transmission band by puncturing/dropping the REs.

The base station may configure a method to be used by the (eRedCap) UE in the Msg3 PUSCH transmission among the above Msg3 PUSCH transmission methods via SIB1 (per UL BWP or per initial UL BWP). In this instance, the eRedCap UE may determine the Msg3 PUSCH transmission method with reference to a configuration of the SIB1 and then transmit the Msg3 PUSCH by the above method. Alternatively, the Msg3 PUSCH transmission for the eRedCap UE may be pre-defined in the spec by one of the above methods.

Coverage performance issues that may occur when the eRedCap UE transmits the Msg3 PUSCH by rate-matching or puncturing within the determined Msg3 PUSCH transmission band can be alleviated by the base station through MCS configuration, etc.

### Method of determining UE Msg4 PDSCH reception band in random access procedure

After the eRedCap UE transmits the Msg3 PUSCH, the eRedCap UE may receive a Msg4 PDCCH through an initial DL BWP (specific to the eRedCap or shared with the RedCap/non-RedCap) configured for the eRedCap UE. And then, the eRedCap UE may determine a reception frequency band of the Msg4 PDSCH in the following method.

### [Method #3-1] Indication/determination via Msg4 DCI

A UE may indicate/determine the reception frequency band of the Msg4 PDSCH within a (initial) DL BWP that receives (or is configured to receive) the Msg4 PDCCH via DCI received (using TC-RNTI) through the Msg4 PDCCH. In this case, since the UE can determine the Msg4 PDSCH reception frequency band after the successful completion of decoding of scheduling DCI, the UE may need to perform post-FFT RE buffering for a frequency domain exceeding an eRedCap UE PDSCH reception bandwidth for OFDM symbols for a specific time after the Msg4 PDCCH in preparation for when a scheduling gap is small. The specific time may be determined by the method described in the Method #1-1.

### [Method #3-2] Determination by Msg2 PDSCH reception band

The eRedCap UE may determine a UE PDSCH reception band determined for Msg2 PDSCH reception as a Msg4 PDSCH reception frequency band. A Msg4 PDSCH frequency band determined by the Method #3-2 may be ultimately a frequency band determined by the eRedCap UE for SIB1 PDSCH reception when the Method #1-2 has been used. In this method, since the eRedCap UE can always determine a UE PDSCH reception band before a Msg4 PDSCH reception time, there is an advantage in that post-FFT RE buffering is required for a reduced PDSCH/PUSCH bandwidth from a UE perspective.

### [Method #3-3]

The eRedCap UE may determine a specific frequency band within an initial DL BWP (specific to the eRedCap or shared with the RedCap/non-RedCap) configured for the eRedCap UE as the reception frequency band of the Msg4 PDSCH, by pre-definition/pre-agreement or through configuration via broadcast signaling including SIB1. This method has an advantage in that post-FFT RE buffering is required for a reduced PDSCH/PUSCH bandwidth from a UE perspective, in the same manner as the Method #3-2.

### [Method #3-4]

The base station may indicate the reception frequency band of the Msg4 PDSCH of the eRedCap UE in the Msg2 stage (e.g., via MAC RAR). The Method #3-4 may be applied only when the eRedCap is indicated in the Msg1 stage, or may be applied regardless of whether the eRedCap is indicated in the Msg1 stage. That is, the eRedCap UE may expect reception frequency band information of the Msg4 PDSCH of the eRedCap UE in the Msg2 stage (e.g., via MAC RAR) only when the eRedCap is indicated in the Msg1 stage, and then may determine the Msg4 PDSCH reception frequency band based on the information. This method also has an advantage in that post-FFT RE buffering is required for a reduced PDSCH/PUSCH bandwidth from a UE perspective.

### [Description of claims related to UE]

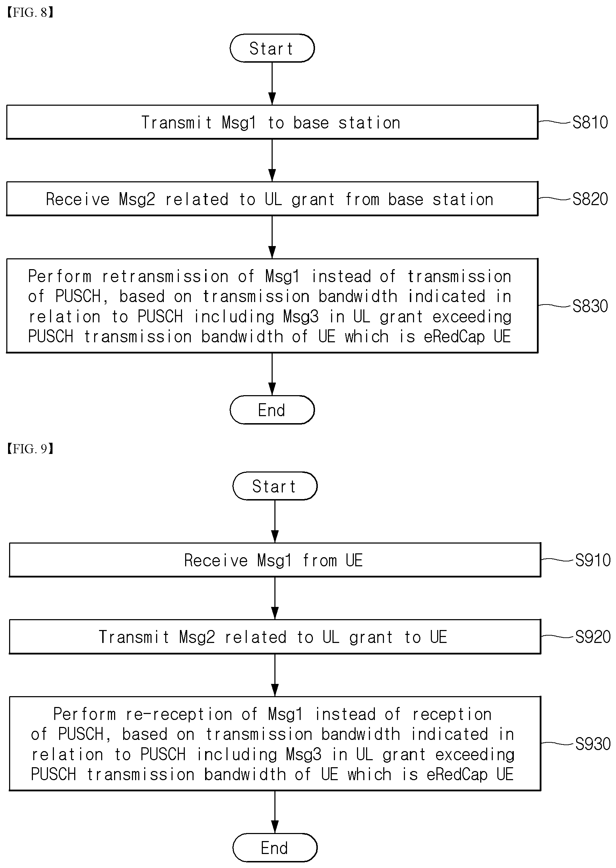

Below, the above-described embodiments are described in detail from a perspective of an operation of a UE with reference to FIG. 8. Methods to be described below are merely distinguished for convenience of explanation. Thus, as long as the methods are not mutually exclusive, it is obvious that partial configuration of any method can be substituted or combined with partial configuration of another method.

FIG. 8 illustrates an example of an operation process of a UE in a system applicable to the present disclosure.

In step S810, a UE transmits message 1 (Msg1) to a base station (BS).

In step S820, the UE receives, from the base station, message 2 (Msg2) related to an uplink (UL) grant.

In step S830, based on a transmission bandwidth indicated in relation to a physical uplink shared channel (PUSCH) including Msg3 in the UL grant exceeding a PUSCH transmission bandwidth of the UE which is an enhanced reduced capability user equipment (eRedCap UE), the UE performs a retransmission of the Msg1 instead of a transmission of the PUSCH.

According to various embodiments of the present disclosure, if a ratio of the indicated transmission bandwidth exceeding the PUSCH transmission bandwidth is less than or equal to a specific value, the PUSCH may be transmitted based on some contiguous bandwidths among the indicated transmission bandwidth.

According to various embodiments of the present disclosure, if the ratio of the indicated transmission bandwidth exceeding the PUSCH transmission bandwidth exceeds the specific value, the retransmission of the Msg1 may be performed instead of the transmission of the PUSCH.

According to various embodiments of the present disclosure, the operation process may further include receiving, from the base station, a first physical downlink shared channel (PDSCH) including system information block 1 (SIB1) related to an initial downlink bandwidth part (DL BWP) before the transmission of the Msg1; and receiving, from the base station, a physical downlink control channel (PDCCH) including scheduling information of a second PDSCH through the initial DL BWP based on eRedCap UE state information of the UE after the transmission of the Msg1.

According to various embodiments of the present disclosure, the Msg1 may be related to the eRedCap UE state information of the UE, and the second PDSCH including the Msg2 may be received through the initial DL BWP.

According to various embodiments of the present disclosure, the second PDSCH may be received in a further reduced specific band than the initial DL BWP based on the eRedCap UE state information of the UE. A post fast Fourier transform (FFT) resource element (RE) buffering may be performed in a band other than the specific band within the initial DL BWP.

According to various embodiments of the present disclosure, if the first PDSCH is received within the initial DL BWP, and the eRedCap UE state information of the UE represents that the UE is related to the eRedCap UE, the specific band may be related to a band in which the first PDSCH is received, and the second PDSCH may be received in the band in which the first PDSCH is received.

According to various embodiments of the present disclosure, the PDCCH may include information on the specific band within the initial DL BWP. The second PDSCH may be received in the specific band.

According to various embodiments of the present disclosure, the UL grant may be related to an eRedCap UE specific UL grant, or the UL grant may be related to an UL grant shared between a RedCap UE and a non-RedCap UE.

According to various embodiments of the present disclosure, there is provided a user equipment (UE) in a wireless communication system. The UE may include a transceiver and at least one processor, and the at least one processor may be configured to perform the operation method of the UE based on FIG. 8.

According to various embodiments of the present disclosure, there is provided a device controlling a user equipment (UE) in a wireless communication system. The device may include at least one processor and at least one memory operably connected to the at least one processor. The at least one memory may be configured to store instructions performing the operation method of the UE based on FIG. 8 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the UE based on FIG. 8.

### [Description of claims related to BS]

Below, the above-described embodiments are described in detail from a perspective of an operation of a base station with reference to FIG. 9. Methods to be described below are merely distinguished for convenience of explanation. Thus, as long as the methods are not mutually exclusive, it is obvious that partial configuration of any method can be substituted or combined with partial configuration of another method.

FIG. 9 illustrates an example of an operation process of a base station in a system applicable to the present disclosure.

In step S910, a base station receives message 1 (Msg1) from a user equipment (UE).

In step S920, the base station transmits, to the UE, message 2 (Msg2) related to an uplink (UL) grant.

In step S930, based on a transmission bandwidth indicated in relation to a physical uplink shared channel (PUSCH) including Msg3 in the UL grant exceeding a PUSCH transmission bandwidth of the UE which is an enhanced reduced capability user equipment (eRedCap UE), the base station performs a re-reception of the Msg1 instead of a reception of the PUSCH.

According to various embodiments of the present disclosure, if a ratio of the indicated transmission bandwidth exceeding the PUSCH transmission bandwidth is less than or equal to a specific value, the PUSCH may be received based on some contiguous bandwidths among the indicated transmission bandwidth.

According to various embodiments of the present disclosure, if the ratio of the indicated transmission bandwidth exceeding the PUSCH transmission bandwidth exceeds the specific value, the re-reception of the Msg1 may be performed instead of the reception of the PUSCH.

According to various embodiments of the present disclosure, the operation process may further include transmitting, to the UE, a first physical downlink shared channel (PDSCH) including system information block 1 (SIB1) related to an initial downlink bandwidth part (DL BWP) before the reception of the Msg1; and transmitting, to the UE, a physical downlink control channel (PDCCH) including scheduling information of a second PDSCH through the initial DL BWP based on eRedCap UE state information of the UE after the reception of the Msg1.

According to various embodiments of the present disclosure, the Msg1 may be related to the eRedCap UE state information of the UE. The second PDSCH including the Msg2 may be transmitted through the initial DL BWP.

According to various embodiments of the present disclosure, the second PDSCH may be transmitted in a further reduced specific band than the initial DL BWP based on the eRedCap UE state information of the UE. A post fast Fourier transform (FFT) resource element (RE) buffering may be performed in a band other than the specific band within the initial DL BWP.

According to various embodiments of the present disclosure, if the first PDSCH is received within the initial DL BWP, and the eRedCap UE state information of the UE represents that the UE is related to the eRedCap UE, the specific band may be related to a band in which the first PDSCH is received, and the second PDSCH may be transmitted in the band in which the first PDSCH is received.

According to various embodiments of the present disclosure, the PDCCH may include information on the specific band within the initial DL BWP. The second PDSCH may be transmitted in the specific band.

According to various embodiments of the present disclosure, the UL grant may be related to an eRedCap UE specific UL grant, or the UL grant may be related to an UL grant shared between a RedCap UE and a non-RedCap UE.

According to various embodiments of the present disclosure, there is provided a base station in a wireless communication system. The base station may include a transceiver and at least one processor, and the at least one processor may be configured to perform the operation method of the BS based on FIG. 9.

According to various embodiments of the present disclosure, there is provided a device controlling a base station in a wireless communication system. The device may include at least one processor and at least one memory operably connected to the at least one processor. The at least one memory may be configured to store instructions performing the operation method of the BS based on FIG. 9 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the BS based on FIG. 9.

### Wireless device applicable to the present disclosure

Examples of wireless devices to which various embodiments of the present disclosure are applied are described below.

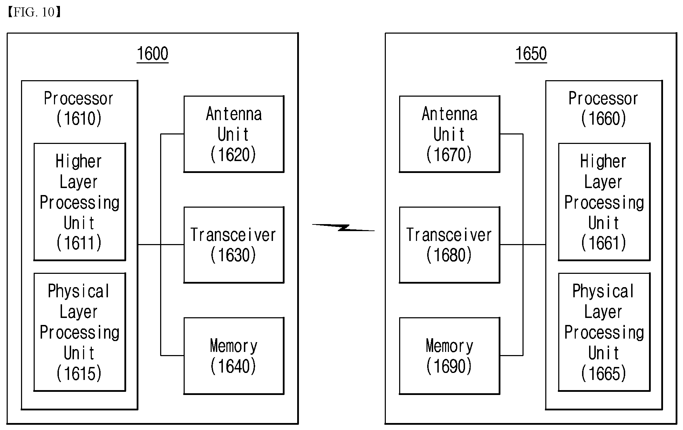

FIG. 10 illustrates an example of a structure of a first device and a second device in a system applicable to the present disclosure.

A first device 1600 may include a processor 1610, an antenna unit 1620, a transceiver 1630, and a memory 1640.

The processor 1610 may perform baseband-related signal processing and include a higher layer processing unit 1611 and a physical layer processing unit 1615. The higher layer processing unit 1611 may process operations of the MAC layer, the RRC layer, or higher layers. The physical layer processing unit 1615 may process the operation of the PHY layer. For example, if the first device 1600 is a base station (BS) device in BS-UE communication, the physical layer processing unit 1615 may perform uplink reception signal processing, downlink transmission signal processing, and the like. For example, if the first device 1600 is a first UE device in inter-UE communication, the physical layer processing unit 1615 may performs downlink reception signal processing, uplink transmission signal processing, sidelink transmission signal processing, and the like. The processor 1610 may control the overall operation of the first device 1600 in addition to performing the baseband-related signal processing.

The antenna unit 1620 may include one or more physical antennas and support MIMO transmission/reception if the antenna unit 1620 includes a plurality of antennas. The transceiver 1630 may include a radio frequency (RF) transmitter and an RF receiver. The memory 1640 may store information processed by the processor 1610 and software, operating systems, and applications related to the operation of the first device 1600. The memory 1640 may also include components such as a buffer.

The processor 1610 of the first device 1600 may be configured to implement the operation of the BS in the BS-UE communication (or the operation of the first UE device in the inter-UE communication) in embodiments described in the present disclosure.

The second device 1650 may include a processor 1660, an antenna unit 1670, a transceiver 1680, and a memory 1690.

The processor 1660 may perform baseband-related signal processing and include a higher layer processing unit 1661 and a physical layer processing unit 1665. The higher layer processing unit 1661 may process the operation of the MAC layer, the RRC layer, or higher layers. The physical layer processing unit 1665 may process the operation of the PHY layer. For example, if the second device 1650 is a UE device in BS-UE communication, the physical layer processing unit 1665 may perform downlink reception signal processing, uplink transmission signal processing, and the like. For example, if the second device 1650 is a second UE device in inter-UE communication, the physical layer processing unit 1665 may perform downlink reception signal processing, uplink transmission signal processing, sidelink reception signal processing, and the like. The processor 1660 may control the overall operation of the second device 1660 in addition to performing the baseband-related signal processing.

The antenna unit 1670 may include one or more physical antennas and support MIMO transmission/reception if the antenna unit 1670 includes a plurality of antennas. The transceiver 1680 may include an RF transmitter and an RF receiver. The memory 1690 may store information processed by the processor 1660 and software, operating systems, and applications related to the operation of the second device 1650. The memory 1690 may also include components such as a buffer.

The processor 1660 of the second device 1650 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 1600 and the second device 1650, and redundant descriptions are omitted.

The wireless communication technology implemented in the devices 1600 and 1650 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 1600 and 1650 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 1600 and 1650 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

The claims described in various embodiments of the present disclosure can be combined in various ways. For example, technical features of the method claims of various embodiments of the present disclosure can be combined and implemented as a device, and technical features of the device claims of various embodiments of the present disclosure can be combined and implemented as a method. In addition, the technical features of the method claims and the technical features of the device claims in various embodiments of the present disclosure can be combined and implemented as a device, and the technical features of the method claims and the technical features of the device claims in various embodiments of the present disclosure can be combined and implemented as a method.

## Claims

1. A method of operating a user equipment (UE) in a wireless communication system, the method comprising:
transmitting a message 1 (Msg1) to a base station (BS);
receiving, from the base station, a message 2 (Msg2) related to an uplink (UL) grant; and
based on a transmission bandwidth indicated in relation to a physical uplink shared channel (PUSCH) including a Msg3 in the UL grant exceeding a PUSCH transmission bandwidth of the UE which is an enhanced reduced capability (eRedCap) UE, performing a retransmission of the Msg1 instead of a transmission of the PUSCH.

2. The method of claim 1, wherein based on a ratio of the indicated transmission bandwidth exceeding the PUSCH transmission bandwidth being less than or equal to a specific value, the PUSCH is transmitted based on some contiguous bandwidths among the indicated transmission bandwidth, and
wherein based on the ratio of the indicated transmission bandwidth exceeding the PUSCH transmission bandwidth exceeding the specific value, the retransmission of the Msg1 is performed instead of the transmission of the PUSCH.

3. The method of claim 1, further comprising:
before a transmission of the Msg1, receiving, from the base station, a first physical downlink shared channel (PDSCH) including system information block 1 (SIB1) related to an initial downlink bandwidth part (DL BWP); and
after the transmission of the Msg1, receiving, from the base station, a physical downlink control channel (PDCCH) including scheduling information of a second PDSCH through the initial DL BWP based on eRedCap UE state information of the UE,
wherein the Msg1 is related to the eRedCap UE state information of the UE, and
wherein the second PDSCH including the Msg2 is received through the initial DL BWP.

4. The method of claim 3, wherein the second PDSCH is received in a further reduced specific band than the initial DL BWP based on the eRedCap UE state information of the UE, and
wherein a post fast Fourier transform (FFT) resource element (RE) buffering is performed in a band other than the specific band within the initial DL BWP.

5. The method of claim 4, wherein based on the first PDSCH being received within the initial DL BWP, and the eRedCap UE state information of the UE representing that the UE is related to the eRedCap UE,
the specific band is related to a band in which the first PDSCH is received, and
the second PDSCH is received in the band in which the first PDSCH is received.

6. The method of claim 4, wherein the PDCCH includes information on the specific band within the initial DL BWP, and
wherein the second PDSCH is received in the specific band.

7. The method of claim 1, wherein the UL grant is related to an eRedCap UE specific UL grant, or
wherein the UL grant is related to an UL grant shared between a RedCap UE and a non-RedCap UE.

8. A method of operating a base station in a wireless communication system, the method comprising:
receiving a message 1 (Msg1) from a user equipment (UE);
transmitting, to the UE, a message 2 (Msg2) related to an uplink (UL) grant; and
based on a transmission bandwidth indicated in relation to a physical uplink shared channel (PUSCH) including a Msg3 in the UL grant exceeding a PUSCH transmission bandwidth of the UE which is an enhanced reduced capability (eRedCap) UE, performing a re-reception of the Msg1 instead of a reception of the PUSCH.

9. The method of claim 8, wherein based on a ratio of the indicated transmission bandwidth exceeding the PUSCH transmission bandwidth being less than or equal to a specific value, the PUSCH is received based on some contiguous bandwidths among the indicated transmission bandwidth, and
wherein based on the ratio of the indicated transmission bandwidth exceeding the PUSCH transmission bandwidth exceeding the specific value, the re-reception of the Msg1 is performed instead of the reception of the PUSCH.

10. The method of claim 8, further comprising:
before a reception of the Msg1, transmitting, to the UE, a first physical downlink shared channel (PDSCH) including system information block 1 (SIB1) related to an initial downlink bandwidth part (DL BWP); and
after the reception of the Msg1, transmitting, to the UE, a physical downlink control channel (PDCCH) including scheduling information of a second PDSCH through the initial DL BWP based on eRedCap UE state information of the UE,
wherein the Msg1 is related to the eRedCap UE state information of the UE, and
wherein the second PDSCH including the Msg2 is transmitted through the initial DL BWP.

11. The method of claim 10, wherein the second PDSCH is transmitted in a further reduced specific band than the initial DL BWP based on the eRedCap UE state information of the UE, and
wherein a post fast Fourier transform (FFT) resource element (RE) buffering is performed in a band other than the specific band within the initial DL BWP.

12. The method of claim 11, wherein based on the first PDSCH being received within the initial DL BWP, and the eRedCap UE state information of the UE representing that the UE is related to the eRedCap UE,
the specific band is related to a band in which the first PDSCH is received, and
the second PDSCH is transmitted in the band in which the first PDSCH is received.

13. The method of claim 11, wherein the PDCCH includes information on the specific band within the initial DL BWP, and
wherein the second PDSCH is transmitted in the specific band.

14. The method of claim 8, wherein the UL grant is related to an eRedCap UE specific UL grant, or
wherein the UL grant is related to an UL grant shared between a RedCap UE and a non-RedCap UE.

15. A user equipment (UE) in a wireless communication system, the UE comprising:
a transceiver;
at least one processor; and
at least one memory operably connectable to the at least one processor and configured to store instructions performing operations based on being executed by the at least one processor,
wherein the operations comprise all steps of a method according to any one of claims 1 to 7.

16. A base station in a wireless communication system, the base station comprising:
a transceiver;
at least one processor; and
at least one memory operably connectable to the at least one processor and configured to store instructions performing operations based on being executed by the at least one processor,
wherein the operations comprise all steps of a method according to any one of claims 8 to 14.

17. A control device controlling a user equipment in a wireless communication system, the control device comprising:
at least one processor; and
at least one memory operably connected to the at least one processor,
wherein the at least one memory is configured to store instructions performing operations based on being executed by the at least one processor, and
wherein the operations comprise all steps of a method according to any one of claims 1 to 7.

18. A control device controlling a base station in a wireless communication system, the control device comprising:
at least one processor; and
at least one memory operably connected to the at least one processor,
wherein the at least one memory is configured to store instructions performing operations based on being executed by the at least one processor, and
wherein the operations comprise all steps of a method according to any one of claims 8 to 14.

19. One or more non-transitory computer readable mediums storing one or more instructions,
wherein the one or more instructions are configured to perform operations based on being executed by one or more processors, and
wherein the operations comprise all steps of a method according to any one of claims 1 to 7.

20. One or more non-transitory computer readable mediums storing one or more instructions,
wherein the one or more instructions are configured to perform operations based on being executed by one or more processors, and
wherein the operations comprise all steps of a method according to any one of claims 8 to 14.
